# EUROPEAN PATENT APPLICATION

(11) **EP 2 387 011 A1**
(43) Date of publication of application: **16.11.2011**
(21) Application number: 11176260.5
(22) Date of filing: 03.04.2008
(51) Int. Cl.: G08B 13/183, G01V 8/20, H04B 10/10

(54) **Line-of-sight optical detection system, and communication system**

(30) Priority: 06.04.2007 EP 07105814
(62) Divisional of application: 08737709.9
(71) Applicant: Koninklijke Philips Electronics N.V., 5621 BA Eindhoven (NL)
(72) Inventor: Damink, Paulus, H., A., 5600 AE Eindhoven (NL); Colak, Sel, B., 5600 AE Eindhoven (NL); Feri, Lorenzo, 5600 AE Eindhoven (NL); Penning de Vries, Hendricus, T., G., M., 5600 AE Eindhoven (NL)
(74) Representative: Damen, Daniel Martijn

(57) **Abstract**

Disclosed is a communication system (100) comprising an illumination system (110) with a plurality of dimmable light sources (111, 112, 113, 114). The system further comprises a controller (130) for controlling the light sources such that they emit coded light and a receiver (200) with a light detector (211) and a CPU (230).

The light detector has an output coupled to the CPU and is capable of receiving light from a least one of the light sources. The CPU is arranged to decode the signal received from the light detector and is arranged on the basis of the outcome of the decoding, to decide on an action to be taken.

## Description

### FIELD OF THE INVENTION

The present invention relates in general to a line-of-sight optical detection system, particularly for detecting the presence of objects, animals or people, more particularly capable of detecting the position of detected objects, animals or people.

The present invention also relates in general to a communication system, for sending personalized messages to a person or apparatus or receiving personalized messages from a person or apparatus.

### BACKGROUND OF THE INVENTION

In many applications, it is desirable to have a detection system that is capable of detecting the position of objects, animals or people.

For instance, particularly inside a building but also outdoors, an intrusion detection system may be desirable, capable of detecting the presence of an object, animal or person, capable of detecting the position of such obj ect, animal or person, capable of tracking such object, animal or person, and perhaps even capable of measuring the size of such object, animal or person.

Further, in the context of traffic, a traffic detection system may be desirable, capable of detecting the presence of a vehicle, capable of detecting the position of such vehicle, and capable of detecting movement of vehicles. With such traffic detection system, it is possible to count traffic, detect traffic jams, open additional traffic lanes to reduce traffic jams, detect unauthorized use of restricted traffic lanes, etc.

Further, in the context of safety protection, an obstruction detection system may be desirable, capable of detecting that a certain area is free from obstructions. For instance, safety regulations may require that certain machinery is only allowed to operate if all people are at a certain safety distance. Or, automatic doors, such as used in elevators etc, should not close if there are objects, animals or people located between the doors.

Line-of-sight detection systems are already known. Basically, they comprise a light source and a light detector. The light source is arranged to generate a relatively narrow light beam, the light detector is arranged to be primarily sensitive to the light form the light source (for instance by shielding away ambient light). If the light detector does receive the light form the light source, the line-of-sight between light source and light detector is free from obstructions, and the status of the detection is "NOTHING DETECTED". If the light detector does not receive the light form the light source, the line-of-sight between light source and light detector is apparently blocked, and the status of the detection is "PRESENCE DETECTED". Since, as mentioned, line-of-sight detection systems are already known, a further explanation of their functioning is not required.

Based on the same principle of line-of-sight detection, detection systems for detecting atmospheric conditions are known, notably fog detection systems. In such systems, the light source and light detector are arranged at locations where it is highly unlikely that a person or animal will be located in between, at least for a longer time period (allowing for a bird to pass). A reduction in detected light level is then considered to be caused by a reduction of atmospheric visibility.

It is noted that the above possible applications of a line-of-sight detection system are given by way of non-limiting example only.

There are many applications where it would be desirable that a person or apparatus could communicate with surrounding equipment or systems.

One example is a presence response system. A person approaching or entering a room is automatically recognized. The recognition may include an authorization aspect: if the person is not authorized to enter the room, the system may take some action. Conversely, it may be that a person is not authorized to leave a room or a building: if the system recognizes that the person is trying to leave, it may take some action. On the other hand, if the system recognizes that the person is authorized to enter the room, it may take automatic action such as opening the door, switching on lights, radio and/or television, drawing curtains, etc.

It is also possible that the system is part of a guided tour device. The person is provided with a receiver and sound generator (for instance an ear phone) for receiving and playing audio, i.e. music and/or spoken text. For instance in a museum, the person can automatically obtain interesting information on objects he is visiting. Instead of prior art systems of this kind, which include pre-recorded presentations which force the person to make the tour in a predetermined order, the person would be entirely free to make a tour in whatever order, and the information presented to him at a certain time would be the information relevant at that particular time because he is looking at a particular item.

It is also possible that the system is part of a warning system, warning the person for dangers in his environment. Again, the person is provided with a receiver and sound generator (for instance an ear phone) for receiving and playing audio, i.e. a warning sound and/or spoken text. This would especially be helpful to persons who are visually impaired. As an example, the system could inform the person on the status of traffic lights. As another example, the system could inform the person on the number and/or destination of an approaching bus. As another example, the system could warn the person that he is approaching a dangerous situation, such as stairs, equipment, etc.

It is also possible that a mobile apparatus is automatically adapting to its surroundings. For instance, a car can automatically adapt its speed to a speed limit.

In all of the currently known line-of-sight detection systems, there are some basic disadvantages.

One basic disadvantage is that the light source and the light detector are dedicated instruments, used for their task in the detection system only. This means that the costs of light source and light detector have their justification in the detection system only, in other words it adds to the costs of the detection system.

Another basic disadvantage is that the detection system is only capable of performing a one-dimensional detection without position resolution along this one dimension. If the light detector does not receive the light from the light source any more, the conclusion can only be that the line-of-sight between light source and light detector is blocked at some location along the line-of-sight, but the obstruction can be located at any position along the line-of-sight. A further consequence is that such detection system is not capable of measuring the size of the obstruction: does it see a man or a mouse? Likewise, for use in a traffic counting system, when a light source and light detector are located at opposite sides of the road, it is possible to detect the passing of a vehicle by detecting a brief interruption of the received light, but it is not possible to distinguish between two lanes, and if two (or more) vehicles are passing simultaneously in different lanes, they will be detected and counted as one. Similarly, for use in a detection system for detecting atmospheric conditions, it may be that the detected light level is reduced due to contamination of the light source or the light detector, which may then erroneously be interpretated as fog.

If it is desirable to reduce, for the system as a whole, the above-mentioned disadvantage of one-dimensional detection capability without position resolution along this one dimension, the system as a whole would require multiple source/detector sets, further increasing the costs of the system.

### SUMMARY OF THE INVENTION

An object of the present invention is to reduce the above problems.

A line-of-sight detection system comprises a plurality of light sources and at least one light detector capable of receiving the light from each of the light sources, wherein the light from the light sources is coded so that the light detector is capable of determining the origin (identity of the light source) of the detected light. Since the locations of the various light sources are known, the directions of the corresponding lines-of-sight are known. The detection system may comprise a plurality of light detectors, each detector capable of receiving the light from a plurality of the light sources. Thus, a large number of line-of-sight combinations are created. Each line-of-sight will constitute a one-dimensional presence detector, but the system as a whole constitutes a multi-dimensional detector with two-dimensional or even three-dimensional detection capability, depending on the positional distribution of light sources and light detectors. In contrast to prior art, where providing N source/detector sets would only lead to N line-of-sight combinations, the invention allows to provide N light sources and M (independent from N) light detectors in combination providing NxM line-of-sight combinations (if all sources see all detectors and vice versa).

The light sources may be implemented as LEDs and the coding of the light is implemented by CDMA, allowing each light source to transmit a digital identification code and possibly other data.

The light sources may be part of a normal lighting infrastructure, i.e. the light sources operate as illumination light sources. Inside buildings, but also outdoors, spaces (rooms, roads) may be illuminated by a plurality of dimmable LEDs. Dimming of an LED is not done by reducing the LED current but by regularly interrupting the LED current; these interruptions can be patterned to form a code. Since CDMA is a known per se coding principle, a further elaboration is not needed here. An important advantage of using the LEDs of a normal lighting infrastructure is, on the one hand, that existing infrastructure can be used so that it is not necessary to install new LEDs, and on the other hand that the costs of such infrastructure does not only bear on the detection system but also (primarily) bears on the illumination purpose, which is needed anyway, so that the costs of the detection system are relatively low.

In prior art personal messaging systems, use is typically made of RF data transmission. This implies the use of RF data transmitters and RF data receivers, which is relatively costly.

According to the present invention, a personal messaging or communication system comprises a plurality of light sources and at least one light detector capable of receiving the light from each of the light sources, wherein the light from the light sources is coded such as to transmit data.

In a particularly preferred embodiment, the light sources are implemented as LEDs and the coding of the light is implemented by CDMA.

In a particularly preferred embodiment, the light sources are part of a normal lighting infrastructure, i.e. the light sources operate as illumination light sources. Inside buildings, but also outdoors, spaces (rooms, roads) may be illuminated by a plurality of dimmable LEDs. Dimming of an LED is not done by reducing the LED current but by regularly interrupting the LED current; these interruptions can be patterned to form a code. Since CDMA is a known per se coding principle, a further elaboration is not needed here. An important advantage of using the LEDs of a normal lighting infrastructure is, on the one hand, that existing infrastructure can be used so that it is not necessary to install new LEDs, and on the other hand that the costs of such infrastructure does not only bear on the communication system but also (primarily) bears on the illumination purpose, which is needed anyway, so that the costs of the communication system are relatively low. Further advantageous elaborations are mentioned in the dependent claims.

### BRIEF DESCRIPTION OF THE DRAWINGS

These and other aspects, features and advantages of the present invention will be further explained by the following description of one or more preferred embodiments with reference to the drawings, in which same reference numerals indicate same or similar parts, and in which:
Figure 1 schematically illustrates an embodiment of a line-of-sight optical detection system;
Figure 2 schematically shows a block diagram of a communication system.

### DETAILED DESCRIPTION OF THE INVENTION

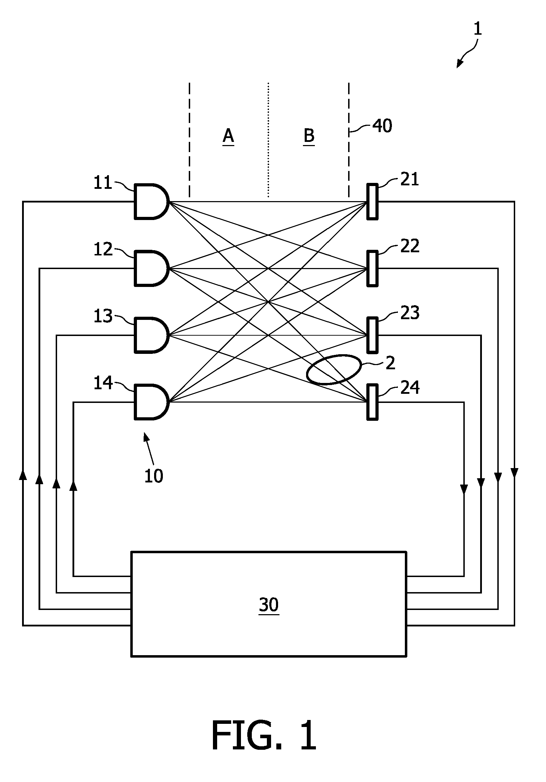

Figure 1 schematically shows a line-of-sight optical detection system 1. This system 1 comprises a plurality of LEDs 11, 12, 13, 14; the number of LEDs shown in figure 1 is equal to four, but the system may have a different number of LEDs. The system further comprises a plurality of light detectors 21, 22, 23, 24, suitably phototransistors; the number of detectors shown in figure 1 is equal to four, but the system may have a different number of detectors. The detectors have their outputs coupled to a controller 30, which may be a suitably programmed microprocessor, for instance.

The LEDs are part of an illumination system 10 for illuminating a room, under control of the controller 30, which controls the LEDs such that they emit CDMA encoded light. Each LED is coded in a different way. Particularly, each LED emits an identification code. The physical positioning of the LEDs may be regular or irregular; in the figure, they are lined up at regular intervals, but this is not essential. The same applies to the physical positioning of the detectors. In the figure, the detectors are positioned opposite corresponding LEDs, but this is not essential.

Although in practice it may happen that a detector cannot "see" all LEDs, and/or that a LED cannot "see" all detectors, in the example of the figure each LED "sees" all detectors and vice versa. The figure shows a maze of lines-of-sight, i.e. straight lines connecting an LED with a detector. Each line-of-sight is the path traveled by the light from an LED to a detector. The light received by one detector is a summation of contributions from different LEDs. In view of the coding in each light, the controller 30 is capable of analyzing the output signal from a certain detector to determine which are the LEDs that emit the light received by the detector, in other words which lines-of-sight associated with that specific detector are "free".

In a prior art system having four LEDs and four detectors, there would have been only four lines-of-sight from LED 11, 12, 13, 14 to detector 21, 22, 23, 24, respectively. Then, an object 2 positioned as shown between two of those four lines-of-sight would not have been detected. In contrast, in the system of the present invention, the maze of lines-of-sight is much finer, and the object 2 is detected: although the detector 24 does receive light from LEDs 13 and 14, it does not receive light from LEDs 11 and 12. Further, in view of the fact that these two lines-of-sight are the only ones blocked, the controller 30 is capable of determining quite accurately the two-dimensional position of the object 2, and estimating the size of the object.

It is noted that, in practice, the LEDs and detectors may be arranged in a three-dimensional array, so that the controller 30 is capable of determining the three-dimensional position of the object 2.

If the object 2 would move, different lines-of-sight become blocked, allowing the controller 30 to note the movement.

Figure 1 may visualize a top view of a room; in that case, the maze of lines-of-sight corresponds to a floor section covered by the system.

It is also possible that figure 1 is visualizing a side view of a safety system for automatic doors, the LEDs being mounted above each other on one door and the detectors being mounted above each other on the opposite door.

It is also possible that figure 1 is visualizing a top view of a traffic control system for monitoring the traffic flow of a road 40, indicated in dotted lines, having multiple lanes A, B. The LEDs and detectors would be positioned on opposite sides of the road 40. In a prior art system, it would not be possible to tell whether the object 2 would be located in lane A or B, but figure 1 clearly illustrates that the system 1 is capable of determining that the object (vehicle) 2 is located in lane B.

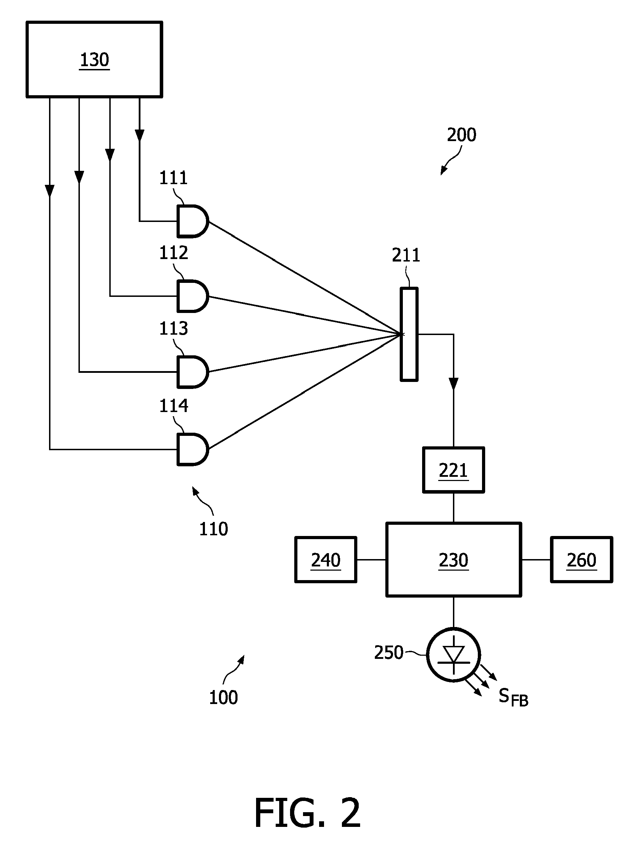

Figure 2 schematically shows components of a communication system 100 according to the present invention, which comprises a plurality of LEDs 111, 112, 113, 114. The number of LEDs shown in figure 1 is equal to four, but the system may have a different number of LEDs. The LEDs are part of an illumination system 110 for illuminating a room, under control of a controller 130, which may be a suitably programmed microprocessor, for instance. The controller 130 controls the LEDs such that they emit CDMA encoded light. The physical positioning of the LEDs may be regular or irregular; in the figure, they are lined up at regular intervals, but this is not essential.

A person (not shown) using the system has a receiver 200 capable of receiving light from the LEDs 111, 112, 113, 114. To this end, the receiver 200 comprises at least one optical detector 211, suitably a phototransistor or photodiode, arranged on an outer surface of, for instance, clothing such as a coat. Of course, the entire receiver 200 device may be arranged on the outer surface of a coat, for instance on a lapel, but at least the optical detector 211 is located on a "visible" location. It is also possible that the optical detector 211 is located on a car.

The receiver 200 further comprises a trans impedance amplifier (TIA) 221. The output signal from the trans impedance amplifier 221 is digitized and fed into the memory of a CPU 230. The CPU 230 decodes the output signal from the trans impedance amplifier 221 and decides what action to take. For instance, if the data received from one or more of the LEDs contain relevant information, the CPU 230 may activate an audio generating device 240 such as a speaker, earphone or the like, in order to generate an audio status signal. It is also possible that the CPU 230 activates an optical transmitter 250, typically an infrared LED, to generate a feedback signal S_{FB}, that is picked up by the sensors (not shown) present for enabling the controller 130 to control the lighting infrastructure. In the case of the receiver 200 being associated with a car, it is possible that the CPU 230 is provided with an interface 260 for communicating with components of the car, such as for instance for automatically controlling the speed of the car.

In a possible implementation, the LEDs may be part of a traffic light. The red LEDs, yellow LEDs and green LEDs may be coded differently such as to convey a message indicating the currently active color. The coding of the LEDs may also comprise a message indicating the identity or location of the traffic light. In the case of a receiver integrated in the clothes of a person, an audio message may inform the person on the status of the traffic light. In the case of a receiver integrated in car, the car may automatically stop.

In a possible implementation, the LEDs may be part of a warning light associated with road constructions and a speed limit. In the case of a receiver integrated in car, the car may automatically slow down to adhere to the speed limit.

In a possible interactive implementation, the LEDs may be part of an illumination system of a chamber with dangerous equipment. The message contained in the coding of the emitted LED light may comprise a warning to the wearer that he is approaching a potentially dangerous situation. The CPU 230 may be expected to send a response message, using the LED 250 to send coded light. The response message may identify the wearer as authorized personnel, but if the wearer is unauthorized, the system may alert a central control and/or may temporarily shutdown the dangerous equipment.

Summarizing, there is provided a line-of-sight optical detection system comprising:
- a plurality of dimmable light sources 11, 12, 13, 14;
- a controller 30 for controlling the light sources to emit coded light;
- a detector 21, 22, 23, 24, receiving light from two or more of said light sources.

The controller decodes the detector output signal, determines which light source contributes to the light received by the detector and, on the basis of the outcome, determines a location of an object 2.

The present invention provides a communication system 100 comprising:
- a plurality of dimmable light sources 111, 112, 113, 114;
- a controller 130 for controlling the light sources to emit coded light;
- a receiver 200 comprising a CPU 230 and a light detector 211, receiving light from at least one of said light sources.

The CPU 230 decodes the detector output signal and, on the basis of the outcome, decides on an action to be taken.

While the invention has been illustrated and described in detail in the drawings and foregoing description, it should be clear to a person skilled in the art that such illustration and description are to be considered illustrative or exemplary and not restrictive. The invention is not limited to the disclosed embodiments; rather, several variations and modifications are possible within the protective scope of the invention as defined in the appending claims.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. A computer program may be stored/distributed on a suitable medium, such as an optical storage medium or a solid-state medium supplied together with or as part of other hardware, but may also be distributed in other forms, such as via the Internet or other wired or wireless telecommunication systems. Any reference signs in the claims should not be construed as limiting the scope.

In the above, the present invention has been explained with reference to block diagrams, which illustrate functional blocks of the device according to the present invention. It is to be understood that one or more of these functional blocks may be implemented in hardware, where the function of such functional block is performed by individual hardware components, but it is also possible that one or more of these functional blocks are implemented in software, so that the function of such functional block is performed by one or more program lines of a computer program or a programmable device such as a microprocessor, microcontroller, digital signal processor, etc.

## Claims

1. Communication system (100), comprising:
- an illumination system (110) comprising a plurality of dimmable light sources (111, 112, 113, 114);
- a controller (130) designed for controlling the light sources such that they emit coded light;
- a receiver (200) comprising a CPU (230) and a light detector (211) having an output coupled to the CPU (230), the detector being capable of receiving light from at least one of said light sources;
wherein the CPU (230) is designed to decode the signal received from the detector and, on the basis of the outcome, to decide on an action to be taken.

2. Communication system according to claim 1, wherein the light sources are LEDs.

3. Communication system according to claim 1, wherein the controller (130) uses CDMA coding.

4. Communication system according to claim 1, wherein the output of the light detector (211) is coupled to the CPU (230) via a trans impedance amplifier (221).

5. Communication system according to claim 1, wherein the receiver (200) further comprises an audio generating device (240), and wherein the CPU (230) is designed, on the basis of the signal received from the detector, to actuate the audio generating device such as to generate an audible signal.

6. Communication system according to claim 1, wherein the receiver (200) further comprises an optical transmitter (250), and wherein the CPU (230) is designed, on the basis of the signal received from the detector, to actuate the optical transmitter such as to generate a feedback signal (S_{FB}).

7. Communication system according to claim 1, associated with an apparatus or vehicle, and wherein the receiver (200) further comprises an interface (260) for communicating with components of the apparatus or vehicle.

8. Warning system, comprising a communication system according to claim 1, wherein the receiver is capable of playing an audio warning message.

9. Vehicle control system, comprising a Communication system according to claim 7, wherein the CPU (230) is capable of influencing the operation of an associated vehicle in response to a signal received from the detector.
